# EUROPÄISCHE PATENTSCHRIFT

(11) **EP 3 728 818 B1**
(45) Veröffentlichungstag und Bekanntmachung des Hinweises auf die Patenterteilung: **27.09.2023**
(21) Anmeldenummer: 18807951.1
(22) Anmeldetag: 21.11.2018
(51) Int. Cl.: F02D 13/06, F02D 41/00, F02D 17/02, F02D 13/02, F01L 13/00, F01L 1/053

(54) **VERFAHREN ZUM BETREIBEN EINER BRENNKRAFTMASCHINE UND BRENNKRAFTMASCHINE**
METHOD FOR OPERATING A COMBUSTION ENGINE, AND COMBUSTION ENGINE
PROCÉDÉ POUR FAIRE FONCTIONNER UN MOTEUR À COMBUSTION INTERNE ET MOTEUR À COMBUSTION INTERNE

(30) Priorität: 21.12.2017 DE 102017223500
(43) Veröffentlichungstag der Anmeldung: 28.10.2020
(73) Patentinhaber: VOLKSWAGEN AKTIENGESELLSCHAFT, 38440 Wolfsburg (DE)
(72) Erfinder: HERMANN, Robert, 01896 Pulsnitz (DE); SARAL, Murat, 38229 Salzgitter (DE)
(86) Internationale Anmeldenummer: PCT/EP2018/082130
(87) Internationale Veröffentlichungsnummer: WO 2019/120848

(56) Entgegenhaltungen:
- EP-A1- 0 450 332
- EP-A2- 1 298 300
- DE-A1-102016 209 957
- JP-A- S57 148 014
- JP-A- S57 188 716

## Beschreibung

Die Erfindung betrifft ein Verfahren zum Betreiben einer Brennkraftmaschine mit einem Verbrennungsmotor, der in einem Teilbetriebszustand betrieben werden kann.

Es sind mehrere Brennräume aufweisende Brennkraftmaschinen bekannt, die temporär in einem sogenannten Teilbetriebszustand betrieben werden können, bei dem ein Teil der Brennräume deaktiviert ist, so dass in diesem oder diesen keine thermodynamischen Kreisprozesse durchgeführt werden. Dies erfolgt mit dem Ziel einer Wirkungsgraderhöhung für den Betrieb solcher Brennkraftmaschinen, weil eine Deaktivierung eines Teils der Brennräume bei im Wesentlichen gleichbleibender Antriebsleistung zu einem Betrieb der verbliebenen aktiven Brennräume mit deutlich höherer Last führt, was mit einem höheren spezifischen Wirkungsgrad der in diesen Brennräume durchgeführten thermodynamischen Kreisprozesse einhergehen kann.

Aus der DE 198 52 209 A1 ist eine Brennkraftmaschine mit einem vollvariablen Ventiltrieb bekannt, bei dem die Gaswechselventile mittels auf Piezoelementen beruhenden Aktoren betätigbar sind.

Die DE 20 2015 004 589 A1 beschreibt eine Brennkraftmaschine mit mehreren Brennräumen, von denen einzelne im Rahmen eines Teilbetriebs deaktiviert werden können, wobei in diesen Brennräumen eine Nachexpansion von Abgas, das aus den weiterhin aktiven Brennräumen übergeströmt ist, erfolgt.

Eine variable und abschaltbare, desmodromische Ventilsteuerung für eine Brennkraftmaschine ist in der DE 100 61 711 A1 beschrieben.

Die DE 10 2016 209 957 A1 offenbart ein Verfahren zum Betreiben einer Brennkraftmaschine, die sowohl in einem Vollbetriebszustand als auch in einem Teilbetriebszustand betreibbar ist, wobei ein möglichst momentenneutrales Umschalten von einem Vollbetrieb zu einem Teilbetrieb realisiert werden soll. Dafür ist vorgesehen, dass für ein Umschalten von dem Vollbetrieb zu dem Teilbetrieb von einer Verwendung eines ersten Einlassnockens zu der Verwendung eines zweiten Einlassnockens für die Betätigung des dem ersten Brennraum zugeordneten Einlassventils gewechselt wird. Der erste Brennraum ist derjenige, in dem auch in dem Vollbetrieb thermodynamische Kreisprozesse durchgeführt werden. Der zweite Einlassnocken bewirkt eine Ventilöffnung, die zu einem im Vergleich zu der Ventilöffnung, die mittels des ersten Einlassnockens bewirkt wird, relativ großen Liefergrad führt. Dazu öffnet der zweite Einlassnocken das Einlassventil im Wesentlichen kurz nach dem oberen Totpunkt des dazugehörigen Kolbens, während der erste Einlassnocken während des Vollbetriebs entsprechend einem Miller-Betrieb ein relativ frühes Öffnen des Einlassventils noch deutlich vor dem oberen Totpunkt bewirkt. Mit Ausnahme dieser Phasenverschiebung sind die Ventilerhebungskurven identisch.

Die JP S57 148014 A offenbart ein Verfahren zum Betreiben eines Dieselmotors, bei dem die selbstzündende Verbrennung bei relativ niedrigen Betriebsdrehzahlen verbessert werden soll, indem die Einlassventile mit Ventilerhebungskurven betätigt werden, die im Vergleich zu denjenigen, mit denen die Einlassventile bei relativ hohen Betriebsdrehzahlen betätigt werden, einen stärkeren Anstieg und auch ein stärkeres Gefälle aufweisen, wobei der maximale Öffnungshub über einen definierten Zeitraum konstant gehalten wird. Dadurch soll ein stärkerer Drall der in die Brennräume strömenden Luft realisiert werden.

Die JP S57 188716 A offenbart eine Ausgestaltung eines Ventiltriebs, mit dem Gaswechselventile wahlweise mit einer von zwei Nockenwellen betätigbar sind, wobei unterschiedliche Ventilerhebungskurven für einen Betrieb der Brennkraftmaschine mit einerseits niedrigen Betriebsdrehzahlen und andererseits hohen Betriebsdrehzahlen vorgesehen sind.

Die EP 0 450 332 A1 offenbart einen Ventiltrieb, bei dem zwei Auslassventile mittels drei Nocken betätigbar sind, von denen ein Nocken eine Ventilerhebungskurve bewirkt, die sich von derjenigen der anderen Nocken unterscheidet.

Der Erfindung lag die Aufgabe zugrunde, den Wirkungsgrad einer in einem Teilbetriebszustand betriebenen Brennkraftmaschine zu erhöhen.

Diese Aufgabe wird mittels eines Verfahrens gemäß dem Patentanspruch 1 gelöst. Eine zur Durchführung eines solchen Verfahrens geeignete Brennkraftmaschine ist Gegenstand des Patentanspruchs 5. Vorteilhafte Ausführungsformen des erfindungsgemäßen Verfahrens und bevorzugte Ausgestaltungen der erfindungsgemäßen Brennkraftmaschine sind Gegenstände der weiteren Patentansprüche und/oder ergeben sich aus der nachfolgenden Beschreibung der Erfindung.

Der Erfindung basiert zum einen auf der Erkenntnis, dass Drosselverluste im Betrieb des Verbrennungsmotors einer Brennkraftmaschine, die aus einem mittels Gaswechselventilen gesteuerten Gaswechsel in den Brennräumen des Verbrennungsmotors resultieren, und folglich auch der Wirkungsgrad für den Betrieb des Verbrennungsmotors unter anderem von den Ventilerhebungskurven, die die Öffnungsverläufe der Gaswechselventile beschreiben, abhängen. Dabei verringern sich die Drosselverluste und erhöht sich folglich der Wirkungsgrad, wenn ein Gaswechselventil möglichst schnell möglichst weit geöffnet wird und, bezogen auf eine vorgegebene Öffnungsdauer, möglichst lange möglichst weit geöffnet gehalten wird. Dabei ist jedoch zu berücksichtigen, dass eine Maximalbeschleunigung der Gaswechselventile nicht überschritten werden darf, um eine Beschädigung der Gaswechselventile und des Verbrennungsmotors insgesamt zu vermeiden. Die Beschleunigung der Gaswechselventile hängt dabei jedoch nicht nur von der Ausgestaltung der dazugehörigen Ventilerhebungskurven sondern auch von der Betriebsdrehzahl des Verbrennungsmotors ab. Bei der Auslegung der Ventilerhebungskurven muss folglich berücksichtigt werden, dass die maximale Beschleunigung der Gaswechselventile bei einer definierten Grenzbetriebsdrehzahl des Verbrennungsmotors, die diejenige Betriebsdrehzahl darstellt, mit der ein Dauerbetrieb des Verbrennungsmotors noch zulässig ist, erreicht wird.

Die Erfindung beruht weiterhin auf der Erkenntnis, dass ein Teilbetrieb für den Verbrennungsmotor einer Brennkraftmaschine in der Regel lediglich bei Betriebsdrehzahlen vorgesehen ist, die deutlich unterhalb der Grenzbetriebsdrehzahl des Verbrennungsmotors liegen. Folglich kann, ausgehend von einer definierten maximal zulässigen Beschleunigung für die Gaswechselventile, eine für den Teilbetrieb des Verbrennungsmotors vorgesehene Ventilerhebungskurve hinsichtlich einer größeren relativen Beschleunigung der Gaswechselventile ausgelegt werden, als eine für den Vollbetrieb vorgesehene Ventilerhebungskurve, wodurch im Teilbetrieb des Verbrennungsmotors die Drosselverluste minimiert werden können, was sich entsprechend positiv auf den Wirkungsgrad im Betrieb des Verbrennungsmotors auswirkt.

Dementsprechend ist ein Verfahren zum Betreiben einer Brennkraftmaschine vorgesehen, die einen Verbrennungsmotor umfasst, der mindestens zwei Brennräume ausbildet, die vorzugsweise von in einem Zylindergehäuse ausgebildeten Zylindern und darin zyklisch auf und ab geführten Kolben begrenzt werden und in denen im Betrieb der Brennkraftmaschine thermodynamische Kreisprozesse durchführbar sind, wobei dann die Gaswechsel in den Brennräumen mittels Gaswechselventilen, d.h. mittels jeweils mindestens eines Einlassventils und mindestens eines Auslassventils je Brennraum, die mittels Nocken einer oder mehrerer Nockenwellen betätigt werden, gesteuert werden und wobei
- ein Vollbetriebszustand vorgesehen ist, bei dem sowohl in einem ersten der Brennräume als auch in einem zweiten der Brennräume die thermodynamischen Kreisprozesse durchgeführt werden und
- ein Teilbetriebszustand vorgesehen ist, bei dem in dem ersten Brennraum die thermodynamischen Kreisprozesse durchgeführt werden und in dem zweiten Brennraum die thermodynamischen Kreisprozesse nicht durchgeführt werden, indem zumindest eine Zufuhr von Kraftstoff in den zweiten Brennraum unterbunden und/oder eine Zündung von Kraftstoff verhindert wird und zudem vorzugsweise die dem zweiten Brennraum zugeordneten Gaswechselventile nicht betätigt und somit geschlossen gehalten werden.

Ein solches Verfahren ist den Erkenntnissen, die zu der Erfindung geführt haben, entsprechend dadurch gekennzeichnet, dass für ein Umschalten zwischen dem Vollbetriebszustand und dem Teilbetriebszustand für die Betätigung mindestens eines dem ersten Brennraum zugeordneten Gaswechselventils zwischen einer Verwendung eines Vollbetriebsnockens (für den Vollbetriebszustand), dessen Nockenkontur eine Vollbetriebsventilerhebungskurve bewirkt, und der Verwendung eines Teilbetriebsnockens (für den Teilbetriebszustand), dessen Nockenkontur eine Teilbetriebsventilerhebungskurve bewirkt, gewechselt wird, wobei die Teilbetriebsventilerhebungskurve in der den Übergang zwischen der Öffnungsbewegung und der Schließbewegung des Gaswechselventils umfassenden Hälfte (bezogen auf den Öffnungshub) in zumindest einem Abschnitt eine größere Steigung als die Vollbetriebsventilerhebungskurve aufweist. Vorzugsweise kann dabei vorgesehen sein, dass die Teilbetriebsventilerhebungskurve in der den Übergang zwischen der Öffnungsbewegung und der Schließbewegung des Gaswechselventils umfassenden Hälfte sowohl in dem die Öffnungsbewegung beschreibenden Teil als auch in dem die Schließbewegung beschreibenden Teil jeweils in zumindest einem Abschnitt eine größere Steigung als die Vollbetriebsventilerhebungskurve aufweist.

Der Begriff "Ventilerhebungskurve" bezeichnet den Verlauf der Öffnungsbewegung eines Gaswechselventils über dem Drehwinkel des dazugehörigen Nockens beziehungsweise der diesen Nocken umfassenden Nockenwelle.

Der Begriff "Steigung" ist erfindungsgemäß unabhängig vom Vorzeichen zu verstehen, so dass darunter sowohl einen Anstieg als auch ein Gefälle fallen kann.

Bei dem Gaswechselventil, für das zwischen einer Öffnung gemäß der Vollbetriebsventilerhebungskurve und der Teilbetriebsventilerhebungskurve gewechselt werden kann, kann es sich um ein, vorzugsweise um alle dem ersten Brennraum oder den ersten Brennräumen zugeordnete Einlassventil(e) und/oder Auslassventil(e) handeln.

Eine größere Steigung der Teilbetriebsventilerhebungskurve im Vergleich zu der Vollbetriebsventilerhebungskurve ist gleichbedeutend mit einer noch und/oder schon relativ hohen Geschwindigkeit in der Öffnungsbewegung des entsprechenden Gaswechselventils in der Nähe des maximalen Öffnungshubs (in dem der Wechsel zwischen der Öffnungsbewegung und der Schließbewegung stattfindet), wodurch das erfindungsgemäß angestrebte Ziel eines möglichst schnellen möglichst weiten Öffnens und eines möglichst lange möglichst weite geöffnet Haltens erreicht werden kann. Die noch relativ hohe Geschwindigkeit kurz vor dem Erreichen des maximalen Öffnungshubs und die schon relativ hohe Geschwindigkeit in der Öffnungsbewegung kurz nach dem maximalen Öffnungshub bedingt jedoch infolge der in dem Punkt des maximalen Öffnungshubs erfolgenden Richtungsumkehr vergleichsweise hohe Beschleunigungen des Gaswechselventils, die jedoch im Teilbetriebszustand des Verbrennungsmotors infolge einer vorzugsweise für diesen Teilbetriebszustand vorgesehenen Begrenzung der maximalen Betriebsdrehzahl, anders als im Vollbetriebszustand, für den eine höhere maximal zulässige Betriebsdrehzahl des Verbrennungsmotors vorgesehen kann, akzeptabel sein können. Folglich kann im Rahmen der Durchführung eines erfindungsgemäßen Verfahrens vorgesehen sein, dass für die Öffnungsbewegung und/oder für die Schließbewegung des Gaswechselventils eine relativ (bezogen auf dieselbe Betriebsdrehzahl) größere maximale Beschleunigung bei der Teilbetriebsventilerhebungskurve im Vergleich zu der maximalen Beschleunigung bei der Vollbetriebsventilerhebungskurve erreicht wird. Dies gilt zumindest für den Vergleich der den maximalen Öffnungshub des Gaswechselventils umfassenden Hälften der Öffnungsbewegungen beziehungsweise Schließbewegungen des Gaswechselventils, vorzugsweise für den Vergleich der vollständigen Öffnungsbewegungen beziehungsweise Schließbewegungen.

Eine zur Durchführung eines erfindungsgemäßen Verfahrens geeignete Brennkraftmaschine umfasst zumindest einen Verbrennungsmotor, der mindestens zwei Brennräume ausbildet, die vorzugsweise von in einem Zylindergehäuse ausgebildeten Zylindern und darin geführten Kolben begrenzt sind und in denen im Betrieb der Brennkraftmaschine thermodynamische Kreisprozesse durchführbar sind, wobei ein Gaswechsel in den Brennräumen mittels Gaswechselventilen, d.h. mittels jeweils mindestens eines Einlassventils und mindestens eines Auslassventils je Brennraum, die mittels Nocken einer oder mehrerer Nockenwellen betätigt werden, steuerbar ist und wobei jeweils für die Betätigung eines einem ersten der Brennräume und einem zweiten der Brennräume zugeordneten Gaswechselventils ein Vollbetriebsnocken und ein Teilbetriebsnocken vorgesehen sind, zwischen deren Nutzung mittels einer Umschaltvorrichtung gewechselt werden kann. Dabei ist weiterhin vorgesehen, dass derjenige Teilbetriebsnocken, der für die Betätigung des dem zweiten Brennraum zugeordneten Gaswechselventils vorgesehen ist, ein Nullnocken ist. Dieser weist folglich keine Nockenerhebung auf und führt daher nicht zu einem Öffnen des diesem zugeordneten Gaswechselventils. Sofern im Betrieb des Verbrennungsmotors zumindest einem Gaswechselventil des zweiten Brennraums der Nullnocken zugeordnet ist, wird dieses demnach geschlossen gehalten, so dass in dem zweiten Brennraum gemäß dem Teilbetriebszustand keine thermodynamische Kreisprozesse durchgeführt werden.

Gekennzeichnet ist eine erfindungsgemäße Brennkraftmaschine zum einen dadurch, dass die Umschaltvorrichtung derart ausgebildet ist, dass die dem ersten Brennraum und dem zweiten Brennraum zugeordneten Gaswechselventile gleichzeitig mittels entweder der Vollbetriebsnocken oder der Teilbetriebsnocken betätigbar sind. Hierzu kann gemäß einer in konstruktiver Hinsicht vorteilhaften Ausgestaltungsform vorgesehen sein, dass die Umschaltvorrichtung einen hülsenförmigen Nockenträger, der drehfest auf einer Grundwelle einer Nockenwelle angeordnet ist, und einen Umschaltaktuator umfasst, wobei der Nockenträger für jedes der diesem zugeordneten Gaswechselventile den dazugehörigen Vollbetriebsnocken und den dazugehörigen Teilbetriebsnocken aufweist, die in Abhängigkeit von einer mittels des Umschaltaktuators einstellbaren Verschiebestellung des Nockenträgers alternativ mit den dazugehörigen Gaswechselventilen zusammenwirken.

Weiterhin ist eine erfindungsgemäße Brennkraftmaschine dadurch gekennzeichnet, dass die Nockenkontur desjenigen Teilbetriebsnockens, der für die Betätigung des dem ersten Brennraum zugeordneten Gaswechselventils vorgesehen ist, einer Teilbetriebsventilerhebungskurve entspricht, und die Nockenkontur zumindest desjenigen Vollbetriebsnockens, der für die Betätigung des dem ersten Brennraum zugeordneten Gaswechselventils vorgesehen ist, einer Vollbetriebsventilerhebungskurve entspricht, wobei diese Nockenkonturen derart ausgebildet sind, dass die Teilbetriebsventilerhebungskurve in der den Übergang zwischen der Öffnungsbewegung und der Schließbewegung des Gaswechselventils umfassenden Hälfte in zumindest einem Abschnitt eine größere Steigung als die Vollbetriebsventilerhebungskurve aufweist.

Eine erfindungsgemäße Brennkraftmaschine kann weiterhin bevorzugt eine Steuerungsvorrichtung umfassen, die derart programmiert ist, dass diese ein erfindungsgemäßes Verfahren automatisiert ausführen kann.

Vorzugsweise kann vorgesehen sein, dass die Phasenlage und/oder der maximale Öffnungshub gemäß der Teilbetriebsventilerhebungskurve dem entsprechenden Wert gemäß der Vollbetriebsventilerhebungskurve entspricht. Weiterhin kann vorgesehen sein, dass die Öffnungsdauer gemäß der Teilbetriebsventilerhebungskurve dem entsprechenden Wert gemäß der Vollbetriebsventilerhebungskurve entspricht. Als "Öffnungsdauer" wird dabei der Drehwinkel der das entsprechende Gaswechselventil betätigenden Nockenwelle, über dem ein Abheben des Gaswechselventils von einem dazugehörigen Ventilsitz bewirkt ist, verstanden. In Verbindung mit der erfindungsgemäß größeren Steigung der Teilbetriebsventilerhebungskurve im Vergleich zu der Vollbetriebsventilerhebungskurve zumindest in der den Übergang zwischen der Öffnungsbewegung und der Schließbewegung umfassenden Hälfte können identische Öffnungsdauern dazu führen, dass die Fläche, die von der Teilbetriebsventilerhebungskurve eingeschlossen ist, größer als diejenige ist, die von der Vollbetriebsventilerhebungskurve eingeschlossen ist. Dies gilt insbesondere, wenn für beide Ventilerhebungskurven derselbe maximale Öffnungshub vorgesehen ist. Weiterhin kann sich durch identische Öffnungsdauern ergeben, dass die Teilbetriebsventilerhebungskurve zumindest in der den Wechsel zwischen der Öffnungsbewegung und der Schließbewegung umfassenden Hälfte in zumindest einem Abschnitt breiter als die Vollbetriebsventilerhebungskurve ist.

Weiterhin kann vorgesehen sein, dass die Größe der von der Teilbetriebsventilerhebungskurve eingeschlossenen Fläche der Größe der von der Vollbetriebsventilerhebungskurve eingeschlossenen Fläche entspricht. Dies kann sich insbesondere dann ergeben, wenn, gegebenenfalls bei gleichem maximale Öffnungshub, die Öffnungsdauer gemäß der Teilbetriebsventilerhebungskurve kürzer als diejenige gemäß der Vollbetriebsventilerhebungskurve gewählt wird.

Gemäß einer bevorzugten Ausführungsform eines erfindungsgemäßen Verfahrens kann vorgesehen sein, dass spätestens beim Überschreiten einer Wechselbetriebsdrehzahl des Verbrennungsmotors, die beispielsweise bei 4000 1/min liegen kann, von dem Teilbetriebszustand in den Vollbetriebszustand umgeschaltet wird. Dies kann bei einer erfindungsgemäßen Brennkraftmaschine durch die vorzugsweise von dieser umfassten Steuerungsvorrichtung automatisiert erfolgen. Durch einen solchen zwingend vorgesehenen Wechsel vom Teilbetriebszustand in Vollbetriebszustand beim Überschreiten der Wechselbetriebsdrehzahl kann vermieden werden, dass das oder die dem ersten Brennraum zugeordneten Gaswechselventile, das/die mit einer hinsichtlich der Drosselverluste optimierten und durch eine relativ hohe Beschleunigung für das/die Gaswechselventil(e) gekennzeichneten Teilbetriebsventilerhebungskurve betätigt wird/werden, bei zu hohen Drehzahlen mit zu hohen Beschleunigungen bewegt wird/werden.

Die unbestimmten Artikel ("ein", "eine", "einer" und "eines"), insbesondere in den Patentansprüchen und in der die Patentansprüche allgemein erläuternden Beschreibung, sind als solche und nicht als Zahlwörter zu verstehen. Entsprechend damit konkretisierte Komponenten sind somit so zu verstehen, dass diese mindestens einmal vorhanden sind und mehrfach vorhanden sein können.
Die vorliegende Erfindung wird nachfolgend anhand eines in den Zeichnungen dargestellten Ausführungsbeispiels näher erläutert. In den Zeichnungen zeigt:
- Fig. 1:: eine erfindungsgemäße Brennkraftmaschine in einer schematischen Darstellung;
- Fig. 2:: in einem schematischen Längsschnitt den Verbrennungsmotor der Brennkraftmaschine gemäß der Fig. 1;
- Fig. 3:: einen Nockenträger des Verbrennungsmotors gemäß den Fig. 1 und 2 und einen dazugehörigen Umschaltaktuator in einer schematischen Darstellung; und
- Fig. 4:: die Ventilerhebungskurven für die den vier Brennräumen des Verbrennungsmotors gemäß den Fig. 1 und 2 zugeordneten Gaswechselventilen für einerseits einen Vollbetriebszustand (obere Reihe) und andererseits einen Teilbetriebszustand (untere Reihe) des Verbrennungsmotors.

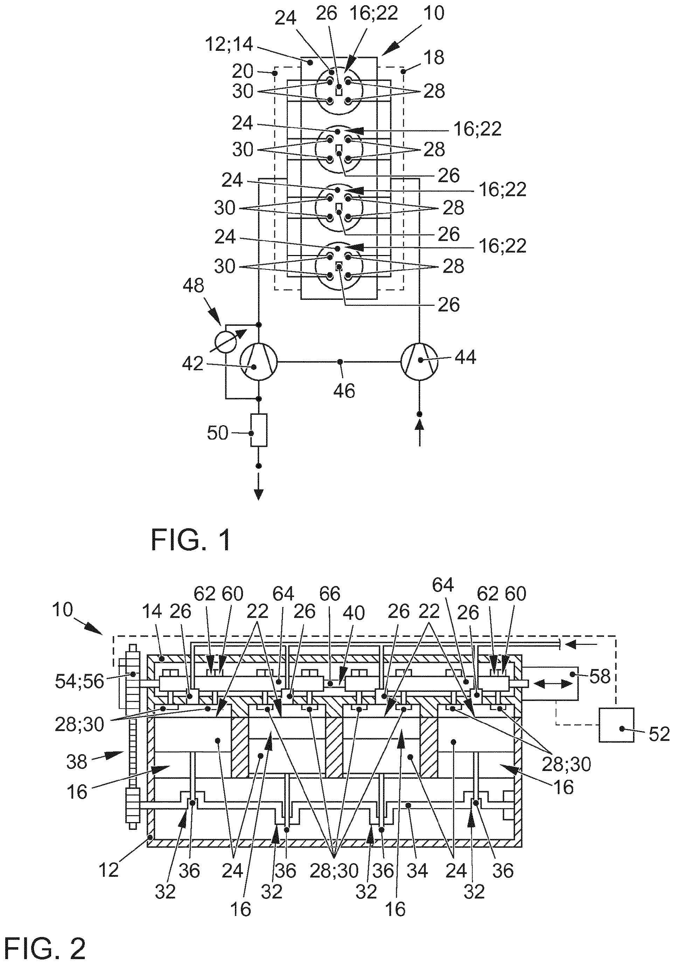

In der Fig. 1 ist schematisch eine erfindungsgemäße Brennkraftmaschine dargestellt. Mittels der Brennkraftmaschine kann beispielsweise ein Kraftfahrzeug (nicht dargestellt), insbesondere ein PKW, angetrieben werden.

Die Brennkraftmaschine umfasst einen in weiteren Details auch in der Fig. 2 dargestellten Verbrennungsmotor 10, der insbesondere nach dem Otto-Prinzip betreibbar ist. Der Verbrennungsmotor 10 bildet in einem Verbund aus Zylinderkurbelgehäuse 12 und Zylinderkopf 14 mehrere (hier: vier) Zylinder 16 aus. Die Zylinder 16 sind einlassseitig mit einem Saugrohr 18 eines Frischgasstrangs und auslassseitig mit einem Abgaskrümmer 20 eines Abgasstrangs der Brennkraftmaschine gasführend verbunden. In bekannter Weise wird in Brennräumen 22, die von den Zylindern 16 zusammen mit darin geführten Kolben 24 sowie dem Zylinderkopf 14 begrenzt sind, Frischgas (im Wesentlichen Luft) mit Kraftstoff verbrannt. Der Kraftstoff kann dazu mittels Injektoren 26 direkt in die Brennräume 22 eingespritzt und das so entstehende Kraftstoff-Frischgas-Gemisch mittels Zündvorrichtungen (nicht dargestellt) gezündet werden. Das bei der Verbrennung des Kraftstoff-Frischgas-Gemisches entstehende Abgas wird über den Abgasstrang abgeführt.

Die Zufuhr des Frischgases in die Brennräume 22 und die Abfuhr des Abgases aus den Brennräumen 22 wird über vier Gaswechselventile, nämlich zwei Einlassventile 28 und zwei Auslassventile 30, je Zylinder 16 gesteuert, die von einem in der Fig. 1 nicht dargestellten Ventiltrieb des Verbrennungsmotors 10 betätigt werden. Der Ventiltrieb umfasst gemäß der Fig. 2 eine Kurbelzapfen 32 ausbildende Kurbelwelle 34, wobei die Kurbelzapfen 32 mit den Kolben 24 über Pleuel 36 verbunden sind. Dadurch werden Linearbewegungen der Kolben 24 in eine Rotation der Kurbelwelle 34 übersetzt, wobei die Rotation der Kurbelwelle 34 wiederum einen periodischen Richtungswechsel der Linearbewegungen der Kolben 24 bewirkt. Die Rotation der Kurbelwelle 34 wird zudem über ein Steuergetriebe, beispielsweise ein Zahnriemengetriebe 38, auf zwei Nockenwellen 40 übertragen, von denen jede über beispielsweise Kipp- oder Schlepphebel (nicht dargestellt) zwei Gaswechselventile 28, 30 je Brennraum 22 betätigt. Von den Nockenwellen 40 ist eine als Einlassnockenwelle ausgebildet, d.h. diese betätigt alle Einlassventile 28, während die andere als Auslassnockenwelle ausgebildet ist und folglich alle Auslassventile 30 betätigt.

Die Brennkraftmaschine umfasst weiterhin einen Abgasturbolader. Dieser weist eine in den Abgasstrang integrierte Turbine 42 sowie einen in den Frischgasstrang integrierten Verdichter 44 auf. Ein von dem Abgasstrom rotierend angetriebenes Laufrad der Turbine 42 treibt über eine Welle 46 ein Laufrad des Verdichters 44 an. Die so bewirkte Rotation des Laufrads des Verdichters 44 verdichtet das durch diesen geführte Frischgas. Mittels beispielsweise eines Wastegates 48 kann eine Ladedruckbegrenzung erzielt werden, indem in einem Betrieb des Verbrennungsmotors 10 mit hohen Drehzahlen und/oder Lasten ein Teil des Abgasstroms an der Turbine 42 vorbei geführt wird. Weiterhin ist eine Abgasnachbehandlungsvorrichtung 50, beispielsweise in Form eines Dreiwegekatalysators, in den Abgasstrang integriert.

Der Verbrennungsmotor 10 kann optional weiterhin jeweils einen von einer Steuerungsvorrichtung 52 (Motorsteuerung) angesteuerten Phasensteller 54 für die Nockenwellen 40 umfassen. Durch solche Phasensteller 54 wird ermöglicht, die Lagen der Öffnungsphasen (Phasenlagen) der dazugehörigen Gaswechselventile 28, 30 bezogen auf die Rotation der Kurbelwelle 34 zu verändern beziehungsweise zu verschieben. Die Phasensteller 54 können in bekannter Weise (vgl. beispielsweise DE 10 2013 223 112 A1) in jeweils ein Getrieberad 56 der Nockenwellen 40 integriert sein. Dementsprechend können die Phasensteller 54 der Nockenwellen 40 jeweils einen drehfest mit der jeweiligen Nockenwelle 40 verbundenen Flügelrotor (nicht dargestellt) aufweisen, der jeweils in Grenzen drehbar innerhalb eines Stators (nicht dargestellt) des Phasenstellers 54 angeordnet ist. Der Stator bildet auf seiner im Wesentlichen zylindrischen Außenfläche eine Zahnkontur für den Eingriff von Zähnen eines Zahnriemens des Zahnriemengetriebes 38 aus. Zwischen dem Flügelrotor und dem Stator der Phasensteller 54 können mehrere Druckkammern ausgebildet sein, die, gesteuert durch ein Phasenstellerventil (nicht dargestellt), gezielt mit einer Flüssigkeit, insbesondere einem Öl, befüllt werden können, um den Flügelrotor innerhalb des Stators definiert zu verdrehen, wodurch, dem Ziel einer Veränderung der Phasenlagen der dazugehörigen Gaswechselventile 28, 30 entsprechend, der Phasenwinkel zwischen der jeweiligen mit dem Flügelrotor verbundenen Nockenwelle 40 und dem mit der Kurbelwelle 32 drehantreibend verbundenen Stator verändert wird.

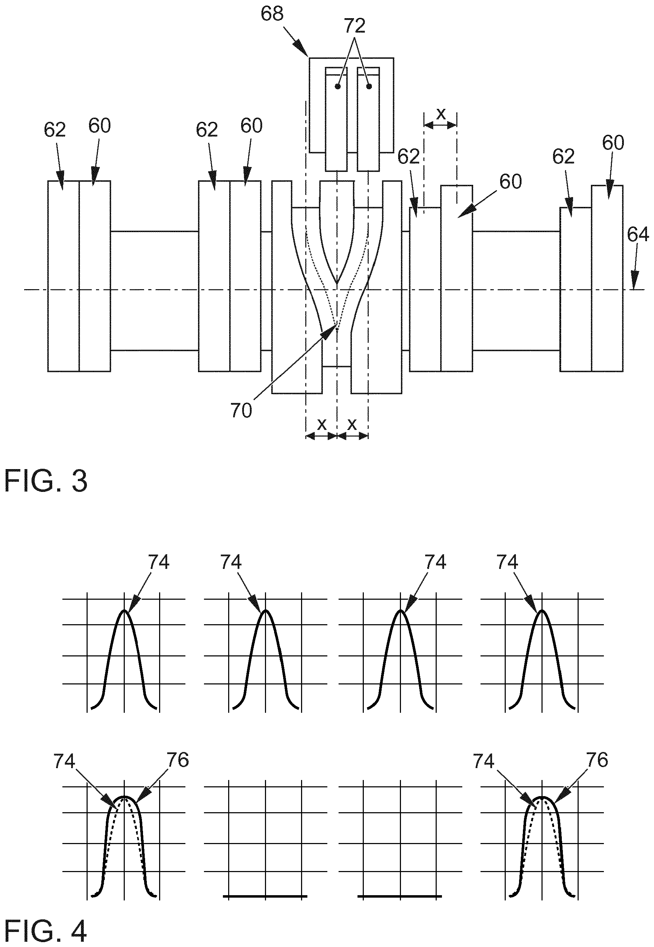

Die Brennkraftmaschine umfasst weiterhin noch eine Umschaltvorrichtung 58, mittels der sowohl für die Einlassventile 28 als auch die Auslassventile 30 von einer Betätigung mittels eines Vollbetriebsnockens 60 zu einer Betätigung mittels eines Teilbetriebsnockens 62 umgeschaltet werden kann. Diese Umschaltvorrichtung 58 ist ebenfalls von der Steuerungsvorrichtung 52 ansteuerbar und in der Fig. 2 nur schematisch angedeutet. Die Funktion der Umschaltvorrichtung 58 beruht auf einer längsaxialen Verschiebbarkeit von hülsenförmigen Nockenträgern 64 (vgl. auch Fig. 3), die drehfest auf einer Grundwelle 66 angeordnet sind, mittels jeweils eines Umschaltaktuators 68 (vgl. Fig. 3), wobei die Nockenträger 64 für jedes der von diesen betätigbaren Gaswechselventile 28, 30 zwei unterschiedliche Nocken 60, 62 aufweisen (vgl. Fig. 3 und 4), die in Abhängigkeit von den eingestellten Verschiebestellungen der Nockenträger 64 alternativ mit den dazugehörigen Einlassventilen 28 und Auslassventilen 30 zusammenwirken.

In dem Ausgestaltungsbeispiel, wie es in den Fig. 2 und 3 dargestellt ist, umfasst jeder der Nockenträger 40 insgesamt vier Nockenpaare, die jeweils einem Gaswechselventil 28, 30 der Brennkraftmaschine zugeordnet sind. Mittels der Nocken 60, 62, die von einem derartigen Nockenträger 64 ausgebildet sind, werden somit entweder die Einlassventile 28 oder die Auslassventile 30 von insgesamt zwei benachbarten Brennräumen 22 des Verbrennungsmotors 10 gemäß den Fig. 1 und 2, bei dem jedem Brennraum 22 zwei Einlassventile 28 und zwei Auslassventile 30 zugeordnet sind, betätigt. Zwischen den beiden den Gaswechselventilen 28, 30 eines ersten Brennraums 22 zugeordneten Nockenpaaren und den beiden den Gaswechselventilen 28 ,30 eines zweiten Brennraums 22 zugeordneten Nockenpaaren bildet der in der Fig. 3 dargestellte Nockenträger 64 weiterhin noch eine Schaltkulisse in Form einer Y-förmigen Führungsnut 70 aus. Durch ein Zusammenwirken dieser Führungsnut 70 mit Mitnehmern 72 des zugehörigen Umschaltaktuators 68 kann der Nockenträger 64 axial um die Distanz x verschoben und dadurch jeweils ein ausgewählter Nocken 60, 62 jedes Nockenpaars mit dem dazugehörigen Gaswechselventil 28, 30 in Wirkverbindung gebracht werden. Gemäß der Fig. 3 kann hierzu beispielsweise ausgehend von der dargestellten Funktionsstellung, in der die Gaswechselventile 28, 30 jeweils mit dem rechts gelegenen Vollbetriebsnocken 60 jedes Nockenpaars in Wirkverbindung stehen, der rechte Mitnehmer 72 ausgefahren und der Nockenträger 64 dadurch, im Zusammenwirken mit seiner Rotation (in der Fig. 3 nach oben) um die Distanz x nach rechts verschoben werden. Infolge des Auslaufens der Y-förmigen Führungsnut 70 in dem mittleren, in der Fig. 3 unteren Abschnitt wird der rechte Mitnehmer 72 dabei wieder in die eingefahrene Stellung zurück bewegt. Nach einem solchen Verschieben des Nockenträgers 64 um die Distanz x befinden sich dann jeweils die links gelegenen Teilbetriebsnocken 62 jedes Nockenpaars in Wirkverbindung mit dem dazugehörigen Gaswechselventil 28, 30. Ein solches Verschieben des Nockenträgers 64 um die Distanz x nach rechts führt weiterhin dazu, dass der linke Mitnehmer 72 In Überdeckung mit dem linken Abschnitt der Y-förmigen Führungsnut 70 gebracht wurde, so dass durch ein Ausfahren dieses Mitnehmers 72 der Nockenträger 64 wieder um die Distanz x nach links verschoben werden kann.

Vorgesehen ist, dass für einen sogenannten Teilbetrieb der Brennkraftmaschine eine Teilmenge und insbesondere die Hälfte der Brennräume 22, konkret im vorliegenden Ausgestaltungsbeispiel die beiden mittigen Brennräume 22, deaktiviert werden können, indem unter anderem eine Zufuhr von Kraftstoff zu den dazugehörigen Injektoren 26 unterbrochen und die diesen zugeordneten Gaswechselventile 28, 30 nicht mehr betätigt, d.h. geöffnet werden. Hierzu ist vorgesehen, dass jedes Nockenpaar, das den Gaswechselventilen 28, 30 eines solchen deaktivierbaren Brennraums 22 zugeordnet ist, einen Teilbetriebsnocken 62 in Form eines Nullnockens ausbildet, der keine Nockenerhebung aufweist und damit nicht zu einem Öffnen eines diesem zugeordneten Gaswechselventils 28, 30 führt. Bei dem Nockenträger 64 gemäß der Fig. 3, der demjenigen entspricht, der in der Fig. 2 links dargestellt ist, sind jeweils die links gelegenen Teilbetriebsnocken 62 der beiden rechts von der Führungsnut 70 angeordneten Nockenpaare als entsprechende Nullnocken ausgebildet. Bei dem in der Fig. 2 rechts dargestellten Nockenträger 64 sind dagegen jeweils die Teilbetriebsnocken 62 der beiden links von einer entsprechenden Führungsnut 70 (in der Fig. 2 nicht dargestellt) des Nockenträgers 64 angeordneten Nockenpaare als Nullnocken ausgebildet. Die übrigen Nocken 60, 62 der Nockenträger 64 bewirken dagegen ein Öffnen des jeweils zugeordneten Gaswechselventils 28, 30 im Betrieb des Verbrennungsmotors 10, wobei einerseits sämtliche Vollbetriebsnocken 60 identische Ventilerhebungskurven gemäß einer Vollbetriebsventilerhebungskurve 74 und andererseits diejenigen Teilbetriebsnocken, die nicht als Nullnocken ausgebildet sind, identische Ventilerhebungskurven gemäß einer Teilbetriebsventilerhebungskurve 76 bewirken. Dabei unterscheiden sich die Vollbetriebsventilerhebungskurve 74 und die Teilbetriebsventilerhebungskurve 76 voneinander, wie sich dies in der Fig. 4 gezeigt ist.

Die Fig. 4 zeigt in der oberen Reihe die Öffnungsbewegungen der den vier Brennräumen 22 zugeordneten Gaswechselventile 28, 30 gemäß der durch die Vollbetriebsnocken 60 bewirkten Vollbetriebsventilerhebungskurve 74 bei einem Vollbetrieb des Verbrennungsmotors 10 und in der unteren Reihe die Öffnungsbewegungen der den vier Brennräumen 22 zugeordneten Gaswechselventile 28, 30 bei einem Teilbetrieb des Verbrennungsmotors 10.

Bei dem Teilbetrieb des Verbrennungsmotors 10 werden die den äußeren Brennräumen 22 zugeordneten Gaswechselventile 28, 30 gemäß der Teilbetriebsventilerhebungskurve 76 geöffnet, wohingegen die den beiden mittleren Brennräumen 22 zugeordneten Gaswechselventile 28, 30 infolge des dann stattfindenden Zusammenwirkens mit den als Nullnocken ausgebildeten Teilbetriebsnocken 62 geschlossen gehalten werden. Um einen besseren Vergleich zwischen der Teilbetriebsventilerhebungskurve 76 und der Vollbetriebsventilerhebungskurve 74 zu ermöglichen, sind in der unteren Reihe der Fig. 4 ergänzend für die den beiden äußeren Brennräumen 22 zugeordneten Gaswechselventile 28, 30 diejenigen Öffnungsbewegungen mit gestrichelter Linienführung eingezeichnet, die sich bei einer Betätigung gemäß der Vollbetriebsventilerhebungskurve 74 ergeben würden.

Erfindungsgemäß ist vorgesehen, dass die Teilbetriebsventilerhebungskurve 76 in der (oberen) Hälfte, die den Übergang zwischen der Öffnungsbewegung und der Schließbewegung beziehungsweise die Stelle des maximalen Öffnungshubs des dazugehörigen Gaswechselventils 28, 30 umfasst, während der Öffnungsbewegung des Gaswechselventils 28, 30 bis relativ kurz vor dem Erreichen des maximalen Öffnungshubs eine im Vergleich zu einer Öffnungsbewegung gemäß der Vollbetriebsventilerhebungskurve 74 relativ große Steigung (Anstieg) aufweist. In gleicher Weise liegt auch während der Schließbewegung schon relativ kurz nach dem Erreichen des maximalen Öffnungshubs eine im Vergleich zu der Vollbetriebsventilerhebungskurve 74 relativ große Steigung (Gefälle) vor. Dadurch wird erreicht, dass die bei einem Betrieb des Verbrennungsmotors 10 im Teilbetriebszustand weiterhin betätigten Gaswechselventile 28, 30, jeweils im Vergleich zu einer Betätigung gemäß der Vollbetriebsventilerhebungskurve 74, relativ schnell relativ weit geöffnet und zudem relativ lange relativ weit geöffnet gehalten werden, wodurch Drosselverluste im Gaswechsel der dann noch aktiven Brennräume 22 gering gehalten werden können.

In der Fig. 4 ist dargestellt, dass die Öffnungsdauer gemäß der Teilbetriebsventilerhebungskurve 76 derjenigen gemäß der Vollbetriebsventilerhebungskurve 74 entspricht, wodurch sich in Verbindung mit einem ebenfalls identischen maximalen Öffnungshub der Gaswechselventile 28, 30 einerseits eine größere Breite der Teilbetriebsventilerhebungskurve 76 in der den Übergang zwischen der Öffnungsbewegung und der Schließbewegung umfassenden Hälfte und andererseits eine größere von der Teilbetriebsventilerhebungskurve 76 eingeschlossene Fläche ergibt. Zwingend erforderlich ist eine solche Ausgestaltung jedoch nicht. Vielmehr kann auch vorgesehen sein, dass die Öffnungsdauer gemäß der Teilbetriebsventilerhebungskurve 76 kürzer oder länger als diejenige gemäß der Vollbetriebsventilerhebungskurve 74 ist. Ebenso können unterschiedliche maximale Öffnungshübe für einerseits eine Betätigung der Gaswechselventile 28, 30 gemäß der Teilbetriebsventilerhebungskurve 76 und andererseits gemäß der Vollbetriebsventilerhebungskurve 74 vorgesehen sein. Daraus folgend können sich auch die Breiten der Ventilbetriebserhebungskurven 74, 76 und die Größen der von diesen eingeschlossenen Flächen beliebig unterscheiden, wobei die Werte für die Teilbetriebsventilerhebungskurve 76 sowohl kleiner als auch größer im Vergleich zu denjenigen für die Vollbetriebsventilerhebungskurve 74 sein können.

### Bezugszeichenliste

- 10: Verbrennungsmotor
- 12: Zylinderkurbelgehäuse
- 14: Zylinderkopf
- 16: Zylinder
- 18: Saugrohr
- 20: Abgaskrümmer
- 22: Brennraum
- 24: Kolben
- 26: Injektor
- 28: Gaswechselventil / Einlassventil
- 30: Gaswechselventil / Auslassventil
- 32: Kurbelzapfen
- 34: Kurbelwelle
- 36: Pleuel
- 38: Zahnriemengetriebe
- 40: Nockenwelle
- 42: Turbine
- 44: Verdichter
- 46: Welle
- 48: Wastegate
- 50: Abgasnachbehandlungsvorrichtung
- 52: Steuerungsvorrichtung
- 54: Phasensteller
- 56: Riemenrad
- 58: Umschaltvorrichtung
- 60: (Vollbetriebs-)Nocken
- 62: (Teilbetriebs-) Nocken
- 64: Nockenträger
- 66: Grundwelle
- 68: Umschaltaktuator
- 70: Führungsnut
- 72: Mitnehmer
- 74: Vollbetriebsventilerhebungskurve
- 76: Teilbetriebsventilerhebungskurve

## Patentansprüche

1. Verfahren zum Betreiben einer Brennkraftmaschine mit einem Verbrennungsmotor (10), der mindestens zwei Brennräume (22) ausbildet, in denen im Betrieb der Brennkraftmaschine thermodynamische Kreisprozesse durchführbar sind, wobei dann Gaswechsel in den Brennräumen (22) mittels Gaswechselventilen (28, 30), die mittels Nocken (60, 62) einer oder mehrerer Nockenwellen (40) betätigt werden, gesteuert werden und wobei
- ein Vollbetriebszustand vorgesehen ist, bei dem sowohl in einem ersten Brennraum (22) als auch in einem zweiten Brennraum (22) die thermodynamischen Kreisprozesse durchgeführt werden und
- ein Teilbetriebszustand vorgesehen ist, bei dem in dem ersten Brennraum (22) die thermodynamischen Kreisprozesse durchgeführt werden und in dem zweiten Brennraum (22) die thermodynamischen Kreisprozesse nicht durchgeführt werden, und wobei für ein Umschalten zwischen dem Vollbetriebszustand und dem Teilbetriebszustand für die Betätigung mindestens eines dem ersten Brennraum (22) zugeordneten Gaswechselventils (28, 30) zwischen einer Verwendung eines Vollbetriebsnockens (60), dessen Nockenkontur eine Vollbetriebsventilerhebungskurve (74) bewirkt, und der Verwendung eines Teilbetriebsnockens (62), dessen Nockenkontur eine Teilbetriebsventilerhebungskurve (76) bewirkt, gewechselt wird, **dadurch gekennzeichnet, dass** die Teilbetriebsventilerhebungskurve (76) in der den Übergang zwischen der Öffnungsbewegung und der Schließbewegung des Gaswechselventils (28, 30) umfassenden Hälfte in zumindest einem Abschnitt eine größere Steigung als die Vollbetriebsventilerhebungskurve (74) aufweist.

2. Verfahren gemäß Anspruch 1, **dadurch gekennzeichnet, dass** die Phasenlage und/oder der maximale Öffnungshub des Gaswechselventils (28, 30) gemäß der Teilbetriebsventilerhebungskurve (76) dem entsprechenden Wert gemäß der Vollbetriebsventilerhebungskurve (74) entspricht.

3. Verfahren gemäß Anspruch 1 oder 2, **dadurch gekennzeichnet, dass** die Öffnungsdauer gemäß der Teilbetriebsventilerhebungskurve (76) dem entsprechenden Wert gemäß der Vollbetriebsventilerhebungskurve (74) entspricht und/oder die Größe der von der Teilbetriebsventilerhebungskurve (76) eingeschlossenen Fläche der Größe der von der Vollbetriebsventilerhebungskurve (74) eingeschlossenen Fläche entspricht.

4. Verfahren gemäß einem der vorhergehenden Ansprüche, **dadurch gekennzeichnet, dass** spätestens beim Überschreiten einer Wechselbetriebsdrehzahl des Verbrennungsmotors (10) von dem Teilbetriebszustand in den Vollbetriebszustand umgeschaltet wird.

5. Brennkraftmaschine mit einem Verbrennungsmotor (10), der mindestens zwei Brennräume (22) ausbildet, in denen im Betrieb der Brennkraftmaschine thermodynamische Kreisprozesse durchführbar sind, wobei ein Gaswechsel in den Brennräumen (22) mittels Gaswechselventilen (28, 30), die mittels Nocken (60, 62) einer oder mehrerer Nockenwellen betätigt werden, steuerbar ist und wobei jeweils für die Betätigung eines einem ersten Brennraum (22) und einem zweiten Brennraum zugeordneten Gaswechselventils (28, 30) ein Vollbetriebsnocken (60) und ein Teilbetriebsnocken (62) vorgesehen sind, zwischen deren Nutzung mittels einer Umschaltvorrichtung (58) umgeschaltet werden kann, wobei derjenige Teilbetriebsnocken (62), der für die Betätigung des dem zweiten Brennraum (22) zugeordneten Gaswechselventils (28, 30) vorgesehen ist, ein Nullnocken ist, wobei die Umschaltvorrichtung (58) derart ausgebildet ist, dass die dem ersten Brennraum (22) und dem zweiten Brennraum (22) zugeordneten Gaswechselventile (28, 30) gleichzeitig mittels entweder der Vollbetriebsnocken (60) oder der Teilbetriebsnocken (62) betätigbar sind und wobei die Nockenkontur desjenigen Teilbetriebsnockens (62), der für die Betätigung des dem ersten Brennraum (22) zugeordneten Gaswechselventils (28, 30) vorgesehen ist, eine Teilbetriebsventilerhebungskurve (76) bewirkt, und die Nockenkontur desjenigen Vollbetriebsnockens (60), der für die Betätigung des dem ersten Brennraum (22) zugeordneten Gaswechselventils (28, 30) vorgesehen ist, eine Vollbetriebsventilerhebungskurve (74) bewirkt, **dadurch gekennzeichnet, dass** diese Nockenkonturen derart ausgebildet sind, dass die Teilbetriebsventilerhebungskurve (76) in der den Übergang zwischen der Öffnungsbewegung und der Schließbewegung des Gaswechselventils (28, 30) umfassenden Hälfte in zumindest einem Abschnitt eine größere Steigung als die Vollbetriebsventilerhebungskurve (74) aufweist.

6. Brennkraftmaschine gemäß Anspruch 5, **dadurch gekennzeichnet, dass** die Nockenkonturen desjenigen Teilbetriebsnockens (62) und desjenigen Vollbetriebsnockens (60), die für die Betätigung des dem ersten Brennraum (22) zugeordneten Gaswechselventils (28, 30) vorgesehen sind, derart ausgebildet sind, dass die Phasenlage und/oder der maximale Öffnungshub gemäß der Teilbetriebsventilerhebungskurve (76) dem entsprechenden Wert gemäß der Vollbetriebsventilerhebungskurve (74) entspricht.

7. Brennkraftmaschine gemäß Anspruch 5 oder 6, **dadurch gekennzeichnet, dass** die Nockenkonturen desjenigen Teilbetriebsnockens (62) und desjenigen Vollbetriebsnockens (60), die für die Betätigung des dem ersten Brennraum (22) zugeordneten Gaswechselventils (28, 30) vorgesehen sind, derart ausgebildet sind, dass die Öffnungsdauer gemäß der Teilbetriebsventilerhebungskurve (76) dem entsprechenden Wert gemäß der Vollbetriebsventilerhebungskurve (74) entspricht und/oder die Größe der von der Teilbetriebsventilerhebungskurve (76) eingeschlossenen Fläche der Größe der von der Vollbetriebsventilerhebungskurve (74) eingeschlossenen Fläche entspricht.

8. Brennkraftmaschine gemäß einem der Ansprüche 5 bis 7, **dadurch gekennzeichnet, dass** die Umschaltvorrichtung (58) einen hülsenförmigen Nockenträger (64), der drehfest auf einer Grundwelle (66) der Nockenwelle (40) angeordnet ist, und einen Umschaltaktuator (68) umfasst, wobei der Nockenträger (64) für jedes der diesem zugeordneten Gaswechselventile (28, 30) den dazugehörigen Vollbetriebsnocken (60) und den dazugehörigen Teilbetriebsnocken (62) aufweist, die in Abhängigkeit von einer mittels des Umschaltaktuators (68) einstellbaren Verschiebestellungen des Nockenträgers (64) alternativ mit den dazugehörigen Gaswechselventilen (28, 30) zusammenwirken.

9. Brennkraftmaschine gemäß einem der Ansprüche 5 bis 8, **gekennzeichnet durch** eine Steuerungsvorrichtung (52), die derart programmiert ist, dass diese ein Verfahren gemäß einem der Ansprüche 1 bis 4 automatisiert ausführen kann.

## Claims

1. Method for operating a combustion engine comprising an internal combustion engine (10) which forms at least two combustion chambers (22) in which thermodynamic cyclic processes can be carried out during operation of the internal combustion engine, wherein gas exchanges in the combustion chambers (22) are then controlled by means of gas exchange valves (28, 30), which are actuated by means of cams (60, 62) of one or more camshafts (40), and wherein
- a full-operation state is provided, in which the thermodynamic cyclic processes are carried out both in a first combustion chamber (22) and in a second combustion chamber (22), and
- a partial-operation state is provided, in which the thermodynamic cyclic processes are carried out in the first combustion chamber (22) and the thermodynamic cyclic processes are not carried out in the second combustion chamber (22),
and wherein, for switching between the full-operation state and the partial-operation state, a change between use of a full-operation cam (60), the cam contour of which brings about a full-operation valve lift curve (74), and the use of a partial-operation cam (62), the cam contour of which brings about a partial-operation valve lift curve (76), is made for actuating at least one gas exchange valve (28, 30) assigned to the first combustion chamber (22), **characterized in that** the partial-operation valve lift curve (76) has a greater slope than the full-operation valve lift curve (74) in at least one section in the half comprising the transition between the opening movement and the closing movement of the gas exchange valve (28, 30).

2. Method according to Claim 1, **characterized in that** the phase position and/or the maximum opening stroke of the gas exchange valve (28, 30) according to the partial-operation valve lift curve (76) corresponds to the corresponding value according to the full-operation valve lift curve (74).

3. Method according to Claim 1 or 2, **characterized in that** the opening duration according to the partial-operation valve lift curve (76) corresponds to the corresponding value according to the full-operation valve lift curve (74) and/or the size of the area enclosed by the partial-operation valve lift curve (76) corresponds to the size of the area enclosed by the full-operation valve lift curve (74).

4. Method according to one of the preceding claims, **characterized in that** the switch is made from the partial-operation state into the full-operation state at the latest when a changeover-operation rotational speed of the internal combustion engine (10) is exceeded.

5. Combustion engine comprising an internal combustion engine (10) which forms at least two combustion chambers (22) in which thermodynamic cyclic processes can be carried out during operation of the combustion engine, wherein a gas exchange in the combustion chambers (22) can be controlled by means of gas exchange valves (28, 30), which are actuated by means of cams (60, 62) of one or more camshafts, and wherein in each case for the actuation of a gas exchange valve (28, 30) assigned to a first combustion chamber (22) and a second combustion chamber, a full-operation cam (60) and a partial-operation cam (62) are provided, with a switch being able to be made between their use by means of a switchover device (58), wherein that partial-operation cam (62) which is provided for actuating the gas exchange valve (28, 30) assigned to the second combustion chamber (22) is a zero cam, wherein the switchover device (58) is designed in such a manner that the gas exchange valves (28, 30) assigned to the first combustion chamber (22) and to the second combustion chamber (22) can be actuated simultaneously by means of either the full-operation cams (60) or the partial-operation cams (62), and wherein the cam contour of that partial-operation cam (62) which is provided for actuating the gas exchange valve (28, 30) assigned to the first combustion chamber (22) brings about a partial-operation valve lift curve (76), and the cam contour of that full-operation cam (60) which is provided for actuating the gas exchange valve (28, 30) assigned to the first combustion chamber (22) brings about a full-operation valve lift curve (74), **characterized in that** said cam contours are designed in such a manner that the partial-operation valve lift curve (76) has a greater slope than the full-operation valve lift curve (74) in at least one section in the half comprising the transition between the opening movement and the closing movement of the gas exchange valve (28, 30) .

6. Combustion engine according to Claim 5, **characterized in that** the cam contours of that partial-operation cam (62) and of that full-operation cam (60) which are provided for actuating the gas exchange valve (28, 30) assigned to the first combustion chamber (22) are designed in such a manner that the phase position and/or the maximum opening stroke according to the partial-operation valve lift curve (76) corresponds to the corresponding value according to the full-operation valve lift curve (74).

7. Combustion engine according to Claim 5 or 6, **characterized in that** the cam contours of that partial-operation cam (62) and of that full-operation cam (60) which are provided for actuating the gas exchange valve (28, 30) assigned to the first combustion chamber (22) are designed in such a manner that the opening duration according to the partial-operation valve lift curve (76) corresponds to the corresponding value according to the full-operation valve lift curve (74) and/or the size of the area enclosed by the partial-operation valve lift curve (76) corresponds to the size of the area enclosed by the full-operation valve lift curve (74).

8. Combustion engine according to one of Claims 5 to 7, **characterized in that** the switchover device (58) comprises a sleeve-shaped cam carrier (64), which is arranged for conjoint rotation on a main shaft (66) of the cam shaft (40), and a switchover actuator (68), wherein the cam carrier (64) has, for each of the gas exchange valves (28, 30) assigned thereto, the associated full-operation cam (60) and the associated partial-operation cam (62) which interact alternatively with the associated gas exchange valves (28, 30) depending on a displacement position of the cam carrier (64), which displacement position is adjustable by means of the switchover actuator (68).

9. Combustion engine according to one of Claims 5 to 8, **characterized by** a control device (52) which is programmed in such a manner that it can carry out a method according to one of Claims 1 to 4 in an automated manner.

## Revendications

1. Procédé pour faire fonctionner un moteur à combustion interne, avec un moteur à combustion interne (10) qui forme au moins deux chambres de combustion (22) dans lesquelles des processus de cycle thermodynamiques peuvent être mis en œuvre pendant le fonctionnement du moteur à combustion interne, des échanges de gaz dans les chambres de combustion (22) étant alors commandés au moyen de soupapes (28, 30) d'échange de gaz qui sont actionnées au moyen de cames (60, 62) d'un ou de plusieurs arbres à cames (40), et dans lequel
- un état de plein fonctionnement est prévu, dans lequel les processus de cycles thermodynamiques sont mis en œuvre aussi bien dans une première chambre de combustion (22) que dans une deuxième chambre de combustion (22), et
- un état de fonctionnement partiel est prévu, dans lequel les processus de cycles thermodynamiques sont mis en œuvre dans la première chambre de combustion (22) et les processus de cycles thermodynamiques ne sont pas mis en œuvre dans la deuxième chambre de combustion (22),
et dans lequel, pour une commutation entre l'état de plein fonctionnement et l'état de fonctionnement partiel, pour l'actionnement d'au moins une soupape (28, 30) d'échange de gaz associée à la première chambre de combustion (22), on peut choisir entre l'utilisation d'une came (60) de fonctionnement complet, dont le contour de came provoque une courbe (74) de levé de soupape de plein fonctionnement, et l'utilisation d'une came (62) de fonctionnement partiel dont le contour de came provoque une courbe (76) de levé de soupape de fonctionnement partiel, **caractérisé en ce que** la courbe (76) de levé de soupape de fonctionnement partiel présente, dans la moitié comprenant la transition entre le mouvement d'ouverture et le mouvement de fermeture de la soupape (28, 30) d'échange de gaz, dans au moins une section, une plus grande pente que la courbe (74) de levé de soupape de plein fonctionnement.

2. Procédé selon la revendication 1, **caractérisé en ce que** le déphasage et/ou la course d'ouverture maximale de la soupape (28, 30) d'échange de gaz selon la courbe (76) de levé de soupape de fonctionnement partiel correspond à la valeur correspondante selon la courbe (74) de levé de soupape de plein fonctionnement.

3. Procédé selon la revendication 1 ou 2, **caractérisé en ce que** la durée d'ouverture selon la courbe (76) de levé de soupape de fonctionnement partiel correspond à la valeur correspondante selon la courbe (74) de levé de soupape de plein fonctionnement et/ou la taille de la surface délimitée par la courbe (76) de levé de soupape de fonctionnement partiel correspond à la taille de la surface délimitée par la courbe (74) de levé de soupape de plein fonctionnement.

4. Procédé selon l'une des revendications précédentes, **caractérisé en ce qu'**au plus tard lors du dépassement d'un régime de fonctionnement alternatif du moteur à combustion interne (10), on passe de l'état de fonctionnement partiel à l'état de plein fonctionnement.

5. Moteur à combustion interne, avec un moteur à combustion interne (10) qui forme au moins deux chambres de combustion (22) dans lesquelles des processus de cycles thermodynamiques peuvent être mis en œuvre pendant le fonctionnement du moteur à combustion interne, un échange de gaz dans les chambres de combustion (22) étant apte à être commandé au moyen de soupapes (28, 30) d'échange de gaz qui sont actionnées au moyen de cames (60, 62) d'un ou de plusieurs arbres à cames, et une came (60) de plein fonctionnement et une came (62) de fonctionnement partiel étant prévues pour actionner une soupape d'échange de gaz (28, 30) associée à une première chambre de combustion (22) et à une deuxième chambre de combustion, entre l'utilisation desquelles il est possible de commuter au moyen d'un dispositif de commutation (58), la came (62) de fonctionnement partiel qui est prévue pour l'actionnement de la soupape (28, 30) d'échange de gaz associée à la deuxième chambre de combustion (22) étant une came nulle, le dispositif de commutation (58) étant conçu de telle sorte que les soupapes (28, 30) d'échange de gaz associées à la première chambre de combustion (22) et à la deuxième chambre de combustion (22) sont aptes à être actionnées simultanément au moyen soit de la came (60) de plein fonctionnement, soit de la came (62) de fonctionnement partiel, et le contour de la came (62) de fonctionnement partiel qui est destinée à l'actionnement de la soupape (28, 30) d'échange de gaz associée à la première chambre de combustion (22) provoque une courbe (76) de levé de soupape de fonctionnement partiel, et le contour de came de la came (60) de plein fonctionnement, qui est prévue pour l'actionnement de la soupape (28, 30) d'échange de gaz associée à la première chambre de combustion (22), provoque une courbe (74) de levé de soupape de plein fonctionnement, **caractérisé en ce que** ces contours de came sont conçus de telle sorte que la courbe (76) de levé de soupape de fonctionnement partiel, dans la moitié comprenant la transition entre le mouvement d'ouverture et le mouvement de fermeture de la soupape (28, 30) d'échange de gaz, présente une pente plus importante dans au moins une section que la courbe (74) de levé de soupape de plein fonctionnement.

6. Moteur à combustion interne selon la revendication 5, **caractérisé en ce que** les contours de came de la came (62) de fonctionnement partiel et de la came (60) de plein fonctionnement qui sont prévues pour l'actionnement de la soupape (28, 30) d'échange de gaz associée à la première chambre de combustion (22) sont conçues de telle sorte que la phase et/ou la course d'ouverture maximale selon la courbe (76) de levé de la soupape de fonctionnement partiel correspond à la valeur correspondante selon la courbe (74) de levé de la soupape de plein fonctionnement.

7. Moteur à combustion interne selon la revendication 5 ou 6, **caractérisé en ce que** les contours de came de la came (62) de fonctionnement partiel et de la came (60) de plein fonctionnement qui sont prévues pour l'actionnement de la soupape (28, 30) d'échange de gaz associée à la première chambre de combustion (22) sont conçus de telle sorte, que la durée d'ouverture selon la courbe (76) de levé de soupape de fonctionnement partiel correspond à la valeur correspondante selon la courbe (74) de levé de soupape de plein fonctionnement et/ou **en ce que** la taille de la surface délimitée par la courbe (76) de levé de soupape de fonctionnement partiel correspond à la taille de la surface délimitée par la courbe (74) de levé de soupape de plein fonctionnement.

8. Moteur à combustion interne selon l'une des revendications 5 à 7, **caractérisé en ce que** le dispositif de commutation (58) comprend un support de came (64) en forme de manchon, qui est agencé de manière solidaire en rotation sur un arbre de base (66) de l'arbre à cames (40), et un actionneur de commutation (68), le support de came (64) comprenant, pour chacune des soupapes (28, 30) d'échange de gaz, la came (60) de plein fonctionnement correspondante et la came (62) de fonctionnement partiel correspondante, qui coopèrent alternativement avec les soupapes (28, 30) d'échange de gaz correspondantes en fonction d'une position de déplacement du support de came (64) apte à être réglée au moyen de l'actionneur de commutation (68).

9. Moteur à combustion interne selon l'une des revendications 5 à 8, **caractérisé par** un dispositif de commande (52) programmé de manière à être apte à mettre en œuvre un procédé selon l'une des revendications 1 à 4 de manière automatisée.
